Europäisches Patentamt

European Patent Office

Office européen des brevets

(11) Numéro de publication : **0 291 412 B1**

(12) **FASCICULE DE BREVET EUROPEEN**

(45) Date de publication du fascicule du brevet :
**30.10.91 Bulletin 91/44**

(21) Numéro de dépôt : **88401162.8**

(22) Date de dépôt : **11.05.88**

(51) Int. Cl.⁵ : **G08B 13/06, F16B 41/00,
B60R 25/10**

(54) **Dispositif de détection d'intervention frauduleuse sur un organe de verrouillage.**

(30) Priorité : **14.05.87 FR 8706782**

(43) Date de publication de la demande :
**17.11.88 Bulletin 88/46**

(45) Mention de la délivrance du brevet :
**30.10.91 Bulletin 91/44**

(84) Etats contractants désignés :
**DE ES GB IT SE**

(56) Documents cités :
**FR-A- 2 443 727**
**GB-A- 2 167 587**
**US-A- 4 253 084**

(56) Documents cités :
**US-A- 4 329 681**
**PATENT ABSTRACTS OF JAPAN, vol. 10, no.
331 (M-533)[2387], 11 novembre 1986, page 99
M 533; & JP-A-61 135 844 (MATSUSHITA ELEC-
TRIC WORKS LTD) 23-06-1986**

(73) Titulaire : **JAEGER
2, rue Baudin
F-92303 Levallois-Perret (FR)**

(72) Inventeur : **Gault, Michel
163, avenue Gabriel Péri
F-92230 Gennevilliers (FR)**

(74) Mandataire : **Martin, Jean-Jacques et al
Cabinet REGIMBEAU 26, Avenue Kléber
F-75116 Paris (FR)**

**Description**

La présente invention concerne un dispositif de détection d'intervention frauduleuse sur un organe de verrouillage.

La présente invention concerne en particulier, mais non exclusivement, un dispositif pour la détection de tentatives de vol de roues de véhicules automobiles.

On a déjà proposé différents dispositifs destinés à empêcher le vol de roues de véhicules.

On a proposé par exemple des dispositifs mécaniques à clefs qui fixent la roue d'un véhicule automobile sur le moyeu, tels que décrits dans les documents FR-A-2102464, FR-A-2159157, FR-A-2270479, FR-A-2247119, FR-A-2328878, FR-A-2420631 et FR-A-2446729.

Ces dispositifs mécaniques à clefs s'avèrent très complexes et relativement coûteux. Par ailleurs, ils interdisent tout démontage de la roue par un usager autorisé ne possédant pas la clef. Cela constitue un inconvénient majeur en cas de perte de cette clef, ou encore lorsque le chauffeur autorisé ne dispose pas de la clef alors que l'un de ses pneumatiques est en état de crevaison.

On a également proposé des enjoliveurs antivol, comme décrit dans les documents FR-A-2470836 et FR-A-2567077. Ces enjoliveurs anti-vol présentent les mêmes inconvénients que les dispositifs mécaniques précités lorsqu'ils utilisent une clef. De plus, les enjoliveurs anti-vol s'avèrent non efficaces dans la pratique et particulièrement complexes de construction.

On a enfin proposé, pour empêcher le vol des roues de véhicules automobiles, d'utiliser des écrous spéciaux comme décrits par exemple dans le document FR-A-2493772. Ces dispositions ne donnent pas pleinement satisfaction. D'une part, elles exigent de disposer en permanence d'un outil spécifique adapté. Le démontage de la roue est rendu fort difficile lorsque cet outil adapté aux écrous n'est pas disponible ou perdu. D'autre part, ces écrous ne présentent pas une sécurité parfaite et peuvent, le cas échéant, être démontés frauduleusement.

La présente invention a pour but de proposer un nouveau dispositif de détection d'intervention frauduleuse sur un organe de verrouillage, plus efficace que les dispositifs antérieurement proposés.

Un autre but de la présente invention est de proposer un dispositif de détection d'intervention frauduleuse sur un organe de verrouillage qui autorise un démontage aisé d'une roue de véhicule automobile par une personne autorisée, sans accessoire spécifique (ni clef, ni outil spécial).

Ces différents buts sont atteints dans le cadre de la présente invention grâce à un dispositif de détection d'intervention frauduleuse sur un organe de verrouillage qui comprend :

— un organe détecteur destiné à être monté sur l'organe de verrouillage et comprenant :

• un moyen émetteur apte à générer une onde électromagnétique,

• au moins un élément interrupteur apte à détecter une tentative d'intervention frauduleuse sur l'organe de verrouillage, pour mettre en service le moyen émetteur, et

— un élément récepteur sensible à l'onde générée par le moyen émetteur.

Selon une caractéristique préférentielle de l'invention, le dispositif de détection comprend une rondelle apte à être chassée sur l'organe de verrouillage tandis que l'organe détecteur est placé dans un boîtier pourvu de languettes élastiques aptes à assurer l'encliquetage du boîtier sur la rondelle.

De préférence, le dispositif comprend en outre un couvercle adapté pour être vissé sur le boîtier afin d'interdire la flexion des languettes et donc le retrait du boîtier.

Selon une autre caractéristique préférentielle de l'invention, le moyen émetteur comprend un oscillateur qui est adapté pour n'émettre que pendant un temps limité consécutif à la fermeture de l'élément interrupteur.

D'autres caractéristiques, buts et avantages de la présente invention apparaîtront à la lecture de la description détaillée qui va suivre et en regard des dessins annexés donnés à titre d'exemple non limitatif et sur lesquels :

— la figure 1 représente une vue schématique sous forme de blocs fonctionnels de la structure générale du dipositif de détection conforme à la présente invention,

— la figure 2 représente une vue schématique en coupe axiale de l'organe détecteur conforme à la présente invention et illustre plus précisément le montage mécanique de ce dernier sur un organe de verrouillage,

— la figure 3 représente une vue schématique d'un adaptateur de chassage proposé dans le cadre de la présente invention,

— la figure 4 représente une vue schématique en coupe de l'organe détecteur et illustre plus précisément deux modes de réalisation de l'élément interrupteur,

— la figure 5 représente une autre vue schématique en coupe axiale de l'organe détecteur, et illustre un troisième mode de réalisation de l'élément interrupteur,

— la figure 6 représente une vue schématique transversale de l'organe détecteur et illustre plus en détail l'un des modes de réalisation de l'élément interrupteur représenté sur la figure 4,

— la figure 7 représente le schéma électrique d'un moyen émetteur conforme à un mode de réalisation de la présente invention,

— la figure 8 représente le schéma électrique d'un élément récepteur conforme à la présente invention, et

— la figure 9 illustre schématiquement la structure d'une pince de dévissage conforme à la présente invention.

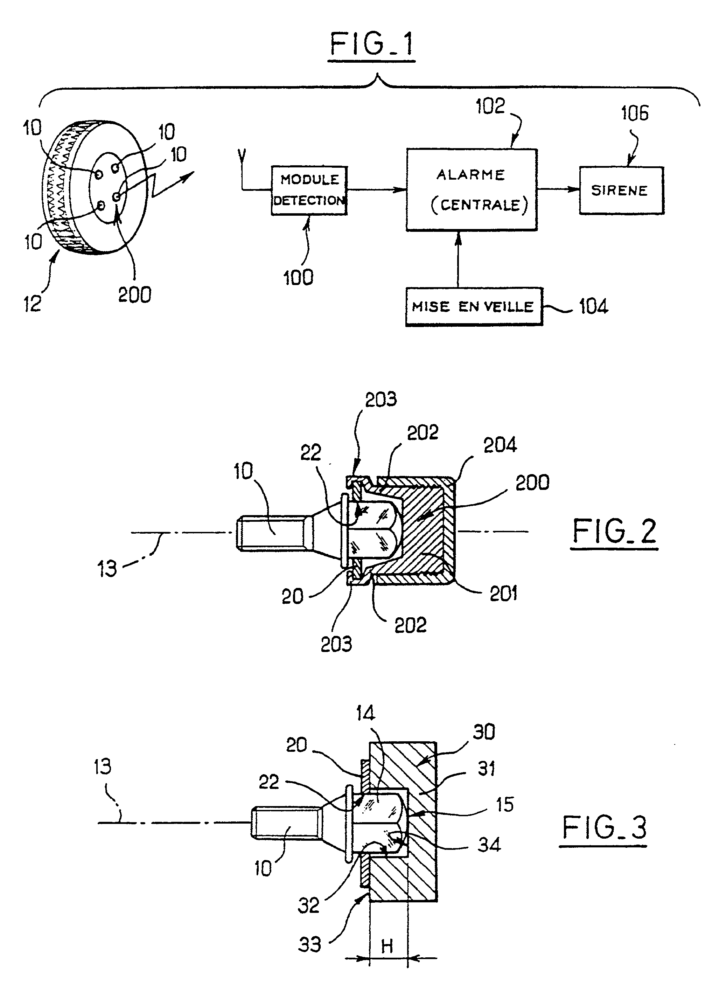

Comme cela est illustré sur la figure 1 annexée, le dispositif de détection d'intervention frauduleuse, conforme à la présente invention, comprend pour l'essentiel un élément récepteur 100 et un organe détecteur 200.

L'organe détecteur 200 est destiné à être monté sur un organe de verrouillage, par exemple un boulon 10 assurant la fixation d'une roue de véhicule automobile.

Dans le cadre de cette application il n'est pas nécessaire que chacun des boulons assurant la fixation d'une roue soit équipé d'un tel organe détecteur. Il suffit dans le cadre de la présente invention que l'un de ces boulons 10 soit équipé.

L'organe détecteur comprend pour l'essentiel un moyen émetteur 210 et un élément interrupteur 230.

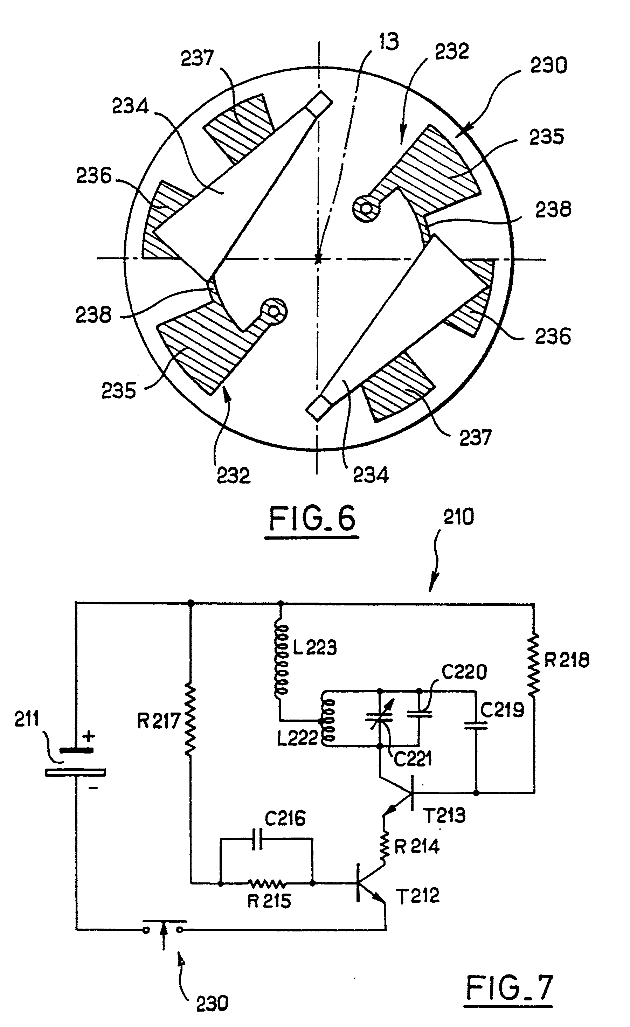

Le moyen émetteur 210 est destiné à générer une onde électromagnétique. La structure d'un exemple de réalisation d'un tel moyen émetteur sera décrite plus en détail par la suite en regard de la figure 7.

L'élément interrupteur 230 est destiné à détecter toute tentative d'intervention frauduleuse sur l'organe de verrouillage 10, pour mettre en service le moyen émetteur 210.

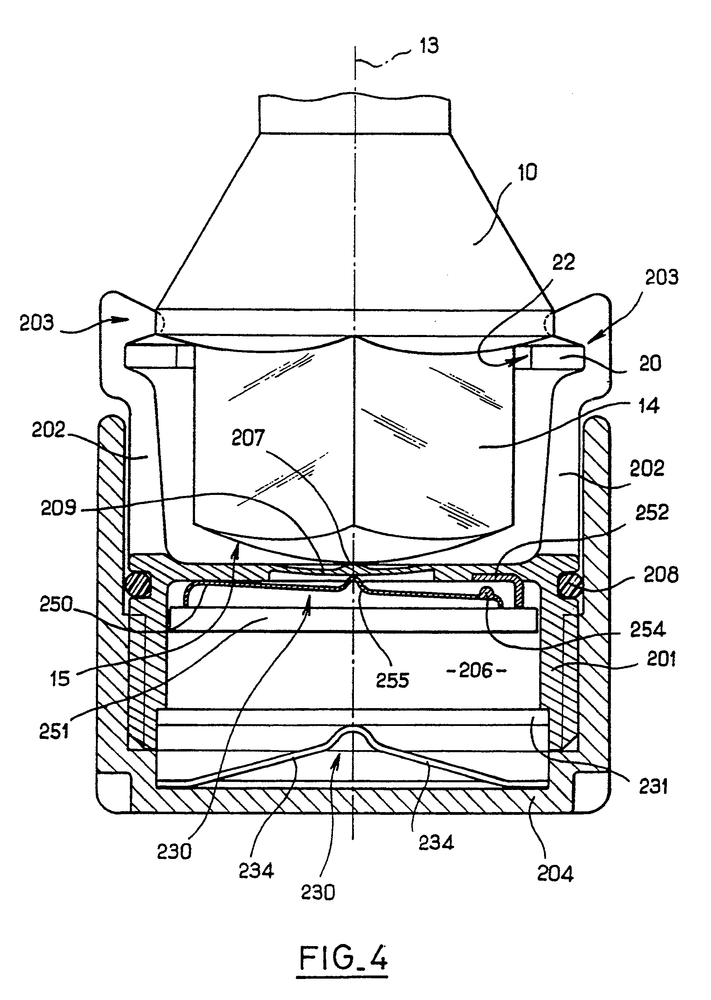

Différents exemples de réalisation de l'élément interrupteur 230 seront décrits plus en détail par la suite en regard des figures 4, 5 et 6.

L'élément récepteur 100 est sensible à l'onde générée par le moyen émetteur 200. Comme illustré schématiquement sur la figure 1, il peut être connecté à une centrale d'alarme 102 installée dans le véhicule, cette dernière étant elle-même associée à un dispositif de mise en veillé 104 et à une sirène d'alarme 106 ou équivalent.

Comme illustré schématiquement sur la figure 2, de préférence dans le cadre de la présente invention, il est prévu une rondelle 20 adaptée pour être chassée sur l'organe de verrouillage 10. A cette fin, la rondelle 20 est munie d'un alésage central 22 dont le contour est complémentaire de la section droite de l'organe de verrouillage 10, soit par exemple de section hexagonale.

Plus précisément encore, de préférence, dans le cadre de la présente invention, il est prévu un jeu de rondelles 20 permettant d'adapter le dispositif de détection sur tous les boulons de roues existant.

Par ailleurs, dans le cadre de la présente invention, de préférence comme illustré sur la figure 2, l'organe détecteur 200 est placé dans un boîtier 201 pourvu vers l'arrière d'une pluralité de languettes élastiques 202 munies sur leur extrémité libre de structures d'accrochage 203 aptes à assurer l'encliquetage du boîtier 201 sur la rondelle 20. En position assemblée, les languettes 202 s'étendent sensiblement parallèlement à l'axe 13 des boulons 10, à partir du boîtier 201, en étant équiréparties autour de l'axe 13 précité.

Les structures d'accrochage 203 viennent en prise avec la périphérie de la rondelle 20.

En outre, selon la présente invention, il est prévu de préférence un couvercle 204 adapté pour être vissé sur le boîtier 201 en recouvrant au moins partiellement les languettes 202 afin d'interdire, lorsque le couvercle 204 est positionné sur le boîtier 201, toute flexion des languettes 202 vers l'extérieur et donc le retrait du boîtier 201.

Bien entendu le boîtier 201 et les languettes 202 doivent envelopper suffisamment le boulon de verrouillage 10 pour interdire toute intervention sur celui-ci tant que le boîtier 201 est encliqueté sur la rondelle 20.

Pour faciliter l'assemblage de l'organe détecteur 200 sur tout type d'organe de verrouillage 10, il est également proposé dans le cadre de la présente invention, un adaptateur de chassage 30 illustré schématiquement sur la figure 3.

Cet adaptateur de chassage 30 est composé d'un corps 31 pourvu d'une cavité 32 qui débouche sur une face principale 33 de l'adaptateur. La cavité 32 est adaptée pour recevoir la tête 14 d'un boulon de verrouillage 10. Lorsque la tête 14 du boulon de verrouillage 10 est engagée dans la cavité 32 et poussée contre le fond 34 de cette cavité, la surface principale 33 de l'adaptateur 30 définit par rapport au sommet 15 de la tête 14 du boulon 10, une côte H de chassage constante pour la rondelle 20.

Comme illustré schématiquement sur la figure 3, pour placer une rondelle 20 sur le boulon 10, on procède par conséquent comme suit : dans un premier temps la rondelle 20 est engagée sur la tête 14 du boulon 10 puis l'organe de chassage 30 est engagé sur la tête 14 pour pousser cette dernière en appui contre le fond 34 de la cavité 32. Lorsque cela est obtenu, la rondelle 20 est placée automatiquement à la côte H recherchée par rapport au sommet 15 de la tête 14 du boulon 10.

Pour cela bien entendu la section droite de la cavité 32 considérée parallèlement à la surface principale 33 doit être supérieure à la section droite de la tête 14 tout en étant inférieure à la section droite de la rondelle 20.

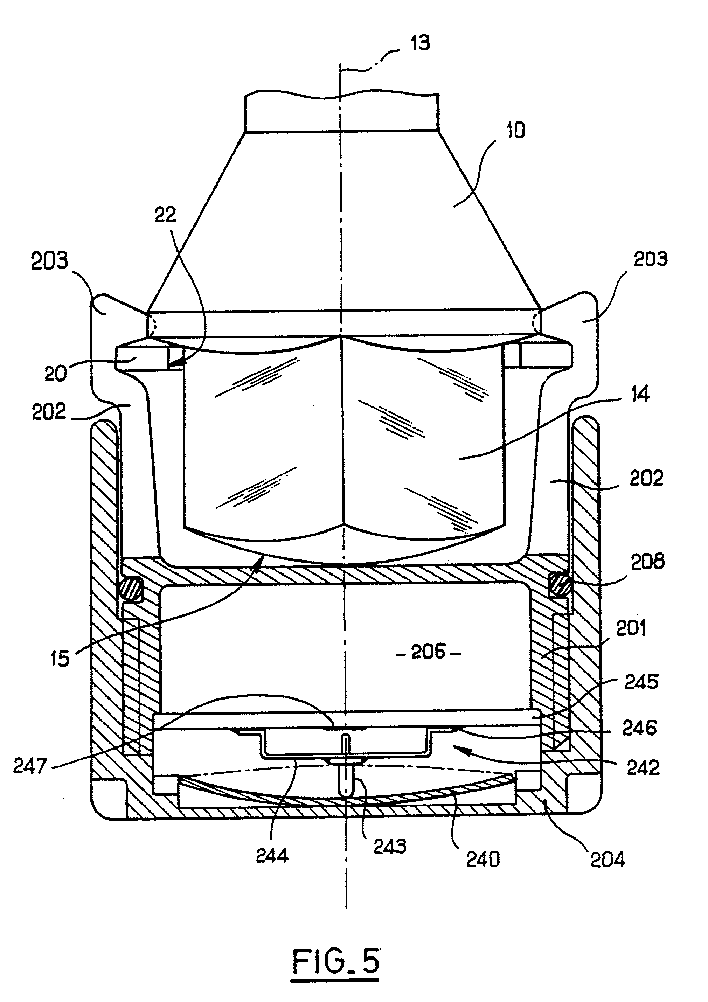

On notera à l'examen des figures 4 et 5 annexées que de préférence le boîtier 201 définit un logement 206 apte à recevoir le moyen émetteur 210. On notera par ailleurs la présence, de préférence, d'un joint torique d'étanchéité 208 entre le couvercle 204 et le boîtier 201.

L'élément interrupteur 230 intégré à l'organe détecteur peut faire l'objet de différents modes de réalisation.

Selon un premier mode de réalisation l'élément interrupteur 230 est sensible au dévissage du couvercle 204.

Un exemple de réalisation d'un interrupteur répondant à cette fonction est illustré sur les figures 4 et 6.

Selon cet exemple de réalisation, il est prévu une plaquette de circuit imprimé 231 supportée par le boîtier 201. La plaquette 231 s'étend transversalement à l'axe 13 du boulon, en regard du couvercle 204. Elle est pourvue de pistes électriquement conductrices 232.

Par ailleurs, le couvercle 204 est muni d'au moins une lame souple électriquement conductrice 234 apte à reposer sur une piste 232 précitée.

La piste 232 est non symétrique de révolution autour de l'axe 13 du boulon. Ainsi, lorsque le couvercle 204 est entraîné à rotation autour de l'axe 13 en vue d'un dévissage, le contact établi entre la lame 234 et la piste 232 est temporaire. On obtient ainsi un interrupteur fermé provisoirement qui permet de contrôler la mise en service du moyen émetteur 210.

Plus précisément encore, selon la représentation donnée sur les figures annexées, il est prévu deux pistes 232 symétriques par rapport à l'axe 13 et deux lames souples 234 coopérant avec ces dernières et également symétriques par rapport à l'axe 13.

Les piste 232 et lame 234 peuvent faire l'objet de nombreuses variantes de réalisation. Pour cette raison la structure de la piste 232 et des lames 234 représentées sur les figures annexées ne sera pas décrite dans le détail par la suite.

On notera cependant que pour définir une succession d'ouvertures et de fermetures de l'élément interrupteur 230 lors de la rotation du couvercle 204, chaque piste 232, comme illustré sur la figure 6, peut être formée d'une pluralité de secteurs séparés 235, 236, 237 placés en regard du trajet de déplacement de la lame 234 associée et reliés entre eux par une liaison 238.

Lorsque la lame 234 repose contre l'un des secteurs 235, 236 ou 237 l'interrupteur électrique 230 est fermé. Par contre, lorsque la lame 234 est placée à l'extérieur de la piste 232 ou entre l'un des deux secteurs précités, l'interrupteur électrique 230 est ouvert.

Selon un second mode de réalisation l'élément interrupteur 230 est adapté pour être sensible à une élévation notable de température. Un tel élément interrupteur a pour but de détecter une tentative de destruction de l'organe de verrouillage 10 par élévation de température, par exemple à l'aide d'un chalumeau.

Selon un troisième mode de réalisation l'élément interrupteur 230 est adapté pour être sensible aux chocs. Un tel élément interrupteur est destiné à détecter une tentative de destruction de l'organe de verrouillage 10 par choc mécanique, par exemple par attaque au burin.

Un mode de réalisation d'un élément interrupteur 230 répondant aux deux fonctions précitées (sensible à la température et au choc) est représenté sur la figure 5 annexée.

Selon cet exemple de réalisation, l'élément interrupteur 230 est placé entre le boîtier 201 et le couvercle 204. Il comprend d'une part un élément cloquant thermosensible 240, d'autre part, un interrupteur électrique 242.

L'élément cloquant 240 est représenté en position de repos, convexe vers l'extérieur du boîtier 201, sur la figure 5. Par contre, on a illustré schématiquement en traits interrompus la position de l'élément cloquant 240 en cas d'élévation de température ou de choc appliqué sur le couvercle 204.

L'interrupteur électrique 242 est associé à l'élément cloquant 240 pour être actionné, de préférence fermé, lorsque l'élément cloquant détecte une élévation notable de température ou des chocs appliqués sur le couvercle 204.

L'interrupteur électrique 242 peut faire l'objet de nombreux modes de réalisation.

Selon le mode de réalisation illustré sur la figure 5 annexée, cet interrupteur électrique 242 comprend un plot 243 placé en regard de l'élément cloquant 240 et supporté par une console 244 élastique. La console 244 est fixée sur une plaquette de circuit imprimé 245. Celle-ci porte deux pistes électriquement conductrices 246, 247. La piste 246 est reliée à la console 244 électriquement conductrice. La piste 247 est placée en regard du plot 243.

En position de repos de l'élément cloquant 240, la console 244 sollicite le plot 243 en éloignement de la piste 247. L'interrupteur électrique 230 est alors ouvert. Par contre, lorsque en cas d'élévation de température ou de choc appliqué sur le couvercle 204, l'élément cloquant 240 se déforme comme illustré en traits interrompus sur la figure 5, le plot 243 vient reposer contre la piste 247. Les pistes 246, 247 sont alors reliées par l'intermédiaire de la console 244 et du plot 243. L'élément interrupteur 230 est ainsi fermé.

Selon un quatrième mode de réalisation, l'élément interrupteur 230 est sensible à une tentative d'arrachement de l'organe détecteur.

Un exemple de réalisation d'un élément interrupteur répondant à cette fonction est représenté également sur la figure 4.

Cet élément interrupteur comprend une lame souple 250 reposant contre un voile flexible 209 ménagé sur le boîtier 201 et apte à venir reposer contre l'organe de verrouillage 10.

La lame souple 250 est portée par une plaquette de circuit imprimé 251. La lame 250 et la plaquette 251 sont logées dans la chambre 206. Le voile flexible 209 est ménagé dans la paroi du boîtier adjacente à la tête 14 de l'organe de verrouillage 10. Le voile 209 présente une faible épaisseur pour présenter une bonne flexibilité. Il possède de préférence un évasement central 207 en saillie sur sa surface dirigée vers la tête 14 de l'organe de verrouillage 10. Ainsi, lorsque l'évasement 207 vient reposer contre la tête 14 de l'organe de verrouillage 10, le voile flexible 209 est sollicité vers l'intérieur de la chambre 206.

La paroi arrière du boîtier 201 adjacente à la tête 14 porte par ailleurs une piste électriquement conductrice 252. La lame 250 s'étend transversalement à l'axe 13. Elle possède à son extrémité adjacente à la piste 252 un plot de contact 254.

De plus, la lame 250 est munie à mi-longueur d'une incurvation 255 en saillie vers l'arrière du boîtier 201, soit en direction de la tête 14 de l'organe de verrouillage 10, incurvation 255 par l'intermédiaire de laquelle la lame 250 repose contre le voile flexible 209.

Lorsque le boîtier 201 est séparé de l'organe de verrouillage 10 aucune contrainte mécanique n'est exercée sur le voile flexible 209 et la lame 250 est sollicitée élastiquement en appui contre la piste 252 par l'intermédiaire du plot de contact 254. ·

L'élément interrupteur 230 correspondant est alors fermé.

Par contre, lorsque comme cela est illustré sur la figure 4 le boîtier 201 est immobilisé sur un organe de verrouillage par encliquetage sur une rondelle 20, le voile flexible 209 vient reposer contre la tête 14 de l'organe de verrouillage 10. Le voile flexible 209 est de ce fait sollicité vers l'intérieur de la chambre 206.

De là, la lame 250 reposant contre le voile flexible 209 par l'intermédiaire de l'incurvation 255, la lame 250 est déplacée vers l'intérieur de la chambre 206 et le plot de contact 254 est séparé de la piste 252. L'élément interrupteur 230 est alors ouvert.

Le dispositif de détection d'intervention frauduleuse conforme à la présente invention peut être équipé d'un seul des éléments interrupteurs précités, en fonction du risque principal rencontré. Cependant, de préférence le dispositif de détection d'intervention frauduleuse, conforme à la présente invention, est équipé de l'ensemble des éléments interrupteurs précités. Ces éléments interrupteurs 230 sont alors placés en parallèle dans la mesure où ils sont à l'état ouvert en fonctionnement normal et passent à l'état fermé en cas de détection d'une intervention frauduleuse. Le cas échéant, si le moyen émetteur 210 était adapté pour être mis en service lors de l'ouverture d'un élément interrupteur, les différents éléments interrupteurs pourraient être adaptés pour passer à l'état ouvert en cas de détection d'une intervention frauduleuse et dans ce cas les différents éléments interrupteurs seraient connectés en série.

On a représenté sur la figure 7 un exemple de réalisation d'un moyen émetteur 210 conforme à la présente invention apte à générer une onde électromagnétique lorsqu'un élément interrupteur 230 associé est fermé. Plus précisément encore, le moyen émetteur 210 illustré sur la figure 7 annexée est adapté pour n'émettre que pendant un temps limité consécutif à la fermeture de l'élément interrupteur.

Pour l'essentiel, le moyen émetteur 210 illustré sur la figure 7 annexée comprend un oscillateur alimenté par l'intermédiaire d'un module comprenant en série l'élément interrupteur 230 et un transistor T 212 polarisé par une cellule RC formée du condensateur C 216 et de la résistance R 215.

L'oscillateur comprend un transistor NPN T 213, par exemple du type BF 199. Le collecteur du transistor T 213 est chargé par un circuit oscillant comprenant en parallèle un bobinage L 122, un condensateur C 220 et un condensateur réglable C 221.

Un point milieu du bobinage L 222 est relié à la borne positive d'une source d'alimentation 211, par exemple une pile au lithium, par l'intermédiaire d'une self L 223.

Le point du circuit oscillant opposé au collecteur du transistor T 213 est relié à la base de ce dernier par l'intermédiaire d'un condensateur C 219. De plus, la base du transistor T 213 est reliée à la borne positive par l'intermédiaire d'une résistance de polarisation R 218.

L'émetteur du transistor T 213 est relié à la borne négative de l'alimentation 211 par l'intermédiaire du module précédemment évoqué comprenant en série l'élément interrupteur 230 (ou le cas échéant une pluralité d'éléments interrupteurs 230 connectés en parallèle) et le trajet principal de conduction émetteur-collecteur d'un transistor NPN T 212 ainsi qu'une résistance de liaison R 214. Le transistor NPN T 212 peut être par exemple du type BC 846B.

La base du transistor T 212 est reliée à la borne positive de l'alimentation 211 par l'intermédiaire d'éléments de polarisation comprenant une cellule RC formée d'un condensateur C 216 et d'une résistance R 215 connectée en parallèle, cette cellule étant elle-même reliée en série d'une résistance de polarisation R 217.

Le fonctionnement du moyen émetteur 210 illustré sur la figure 7 est le suivant.

Lorsque l'interrupteur 230 est ouvert, l'oscillateur n'est pas alimenté. Aucune onde électromagnétique n'est émise.

A la fermeture de l'élément interrupteur 230 le transistor T 212 devient conducteur. L'oscillateur comprenant le transistor T 213 génère alors une onde électromagnétique dont la fréquence est déterminée par l'accord du circuit oscillant L 222-C 221-C 220.

Pendant ce temps, la capacité C 216 se charge par l'intermédiaire de la résistance R 217.

Lorsque le capacité C 216 est chargée la base du transistor T 212 se trouve polarisée par l'intermédiaire de la résistance R 215 connectée en série de la résistance R 217. La résistance R 215 ayant une forte impédance, le transistor T 212 passe à l'état bloqué. Il en est de même du transistor oscillateur T 213. L'émission de l'onde électromagnétique est alors interrompue.

A titre d'exemple, la résistance R 217 peut avoir une impédance de 470 KΩ, la résistance R 215 une impédance de 2,2 MΩ et le condensateur C 216 une capacité de 10 nF.

Comme indiqué précédemment, l'utilisation de pistes conductrices comprenant une pluralité de secteurs 235, 236 et 237 comme illustré sur la figure 6 permet de générer une succession de séquences d'ondes électromagnétiques dans la mesure où la capacité C 216 peut se décharger à travers la résistance R 215 lorsque les lames 234 franchissent l'intervalle entre deux secteurs 235, 236 et 237 précités.

Comme indiqué précédemment, l'élément récepteur 100 est adapté pour détecter l'onde électromagnétique générée par le moyen émetteur 210.

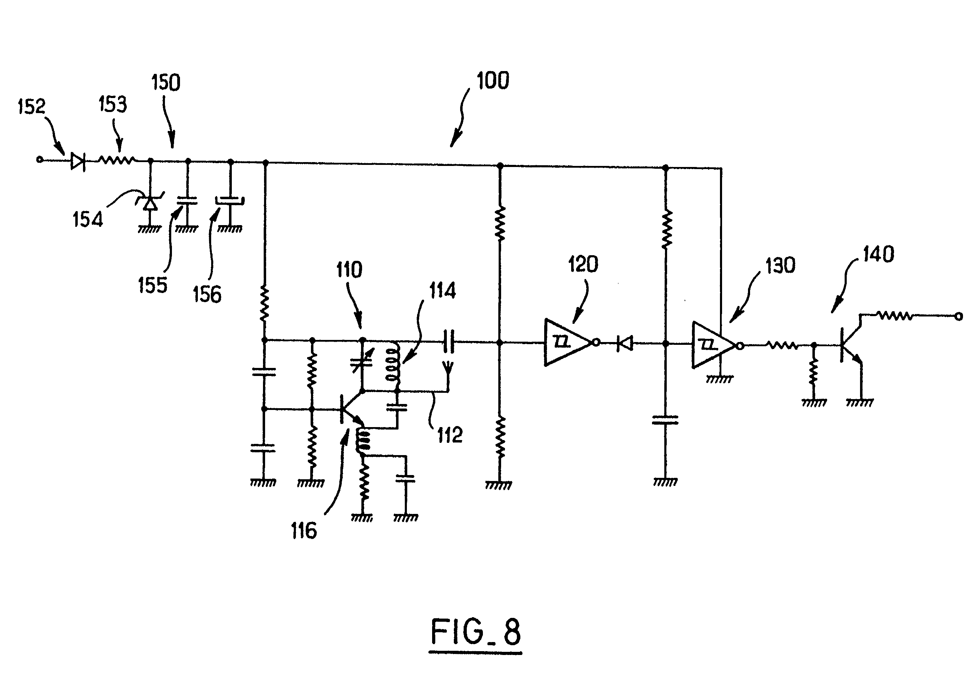

On a illustré sur la figure 8 annexée un exemple de réalisation d'un tel élément récepteur 100.

Cependant, l'invention n'est pas limitée au mode de réalisation illustré sur la figure 8. L'homme de l'art pourra concevoir aisément de nombreuses variantes de réalisation d'éléments récepteurs appropriés.

Pour l'essentiel, l'élément récepteur 100 illustré sur la figure 8 comprend un oscillateur 110, un étage de mise en forme 120, un monostable 130, un étage de sortie 140 et une cellule d'alimentation 150. L'oscillateur 110 comprend une antenne 112 reliée à un circuit bouchon 114 accordé sur la fréquence de l'onde électromagnétique émise par le moyen émetteur 210, le circuit bouchon chargeant le collecteur d'un transistor 116.

Le signal du circuit bouchon 114 est remis en forme par l'étage 120. La sortie de ce dernier est reliée à l'entrée du monostable 130 et ce dernier attaque l'étage de sortie 140.

L'étage de sortie 140 peut être relié à l'entrée périmétrique d'une alarme 102 apte à déclencher une sirène 106.

La cellule d'alimentation 150 comprend une diode de redressement 152, une résistance 153, une diode zéner 154 et deux capacités de filtrage 155, 156.

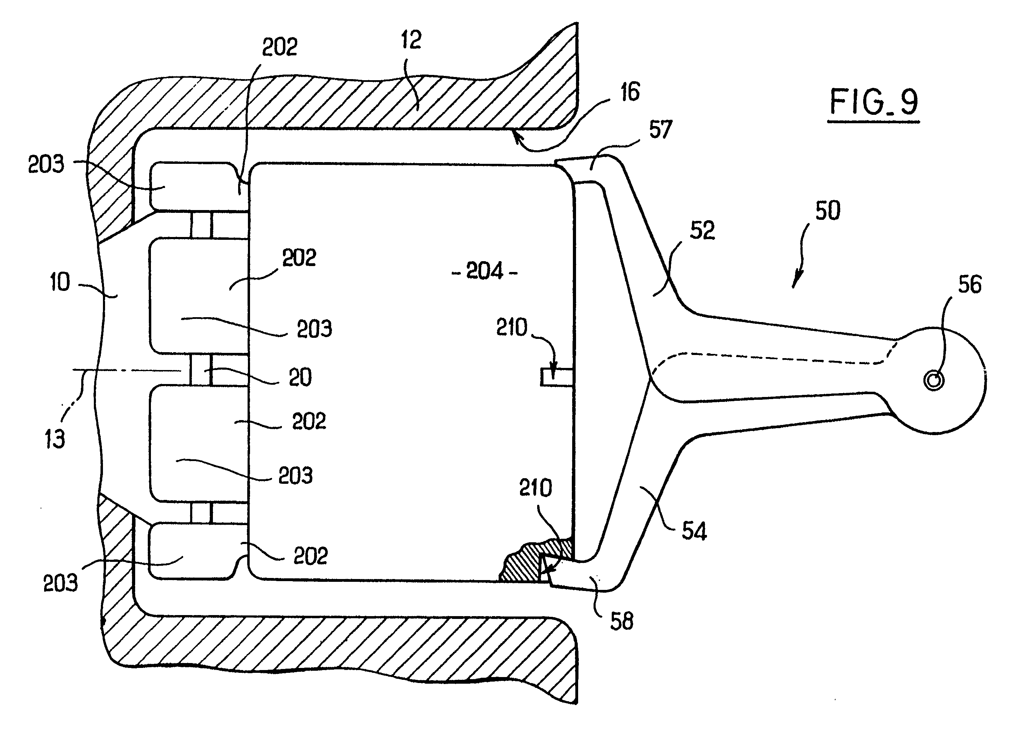

Enfin, on a illustré sur la figure 9 annexée une pince de dévissage susceptible en particulier d'être utilisée lorsque l'organe de verrouillage 10 et donc l'organe détecteur associé est placé dans un logement 16 sensiblement complémentaire ménagé dans la jante de la roue et rendant difficile l'accès au couvercle 204. Bien entendu cette pince n'est nécessaire que dans ce cas particulier.

La pince de dévissage 50 est formée de deux griffes 52, 54 articulées entre elles autour d'un rivet 56. Chaque griffe 52, 54 a la forme générale d'un L. De plus, chaque griffe 52, 54 est pourvue au niveau de son extrémité libre opposée au rivet 56 d'un doigt en saillie 57, 58 apte à pénétrer dans une série de crantages en creux 210 ménagée sur la périphérie du couvercle 204 en position adjacente à sa surface principale 212 transversale à l'axe 13.

Lorsque les doigts 57, 58 de la pince 50 viennent en prise respectivement avec deux crans 210 diamétralement opposés, il suffit d'entraîner la pince 50 à rotation autour de l'axe 13 pour dévisser le couvercle 204.

Bien entendu la présente invention n'est pas limitée aux modes de réalisation particuliers qui viennent d'être décrits mais s'étend à toutes variantes conformes à son esprit.

Par ailleurs, l'invention n'est pas limitée à l'application anti-vol de roues décrite à titre préférentiel. Elle s'applique à toutes détections d'interventions frauduleuses sur un organe de verrouillage.

On notera que le cas échéant le moyen émetteur 210 peut être adapté pour émettre une onde codée, par exemple selon un signal binaire, et non plus seulement une onde électromagnétique pure de fréquence constante.

L'homme de l'art comprendra aisément que lorsque l'organe détecteur précédemment décrit est placé sur le boulon de fixation d'une roue de véhicule automobile et que l'élément récepteur est mis en service, toute tentative de retrait de l'organe détecteur, et donc du couvercle 204 ou du boîtier 201, pour atteindre le boulon 10, sera détecté par l'élément récepteur 100.

Par contre lorsque l'usager autorisé a besoin d'intervenir sur la roue du véhicule, par exemple à la suite d'une crevaison, il lui suffit de retirer le couvercle 204 et le boîtier 201 puis de dévisser normalement le boulon 10. Cette intervention ne requiert pas l'utilisation d'une clef ou d'un outil spécifique.

## Revendications

1. Dispositif de détection d'intervention frauduleuse sur un organe de verrouillage, caractérisé par le fait qu'il comprend :

— un organe détecteur (200) destiné à être monté sur l'organe de verrouillage (10) et comprenant :

— un moyen émetteur (210) apte à générer une onde électromagnétique,

— au moins un élément interrupteur (230) apte à détecter une tentative d'intervention frauduleuse sur l'organe de verrouillage (10), pour mettre en service le moyen émetteur (210), et

— un élément récepteur (100) sensible à l'onde générée par le moyen émetteur (210).

2. Dispositif de détection selon la revendication 1, caractérisé par le fait qu'il comprend une rondelle (20) apte à être chassée sur l'organe de verrouillage (10) et que l'organe détecteur est placé dans un boîtier (201) pourvu de languettes élastiques (202) aptes à assurer l'encliquetage du boîtier (201) sur la rondelle (20).

3. Dispositif de détection selon la revendication 2, caractérisé par le fait qu'il comprend en outre un couvercle (204) adapté pour être vissé sur le boîtier (201) afin d'interdire la flexion des languettes (202) et donc le retrait du boîtier (201).

4. Dispositif de détection selon l'une des revendications 2 et 3, caractérisé par le fait qu'il comprend en outre un adaptateur de chassage (30) composé d'un corps (31) pourvu d'une cavité (32) apte à recevoir la tête (14) de l'organe de verrouillage (10) pour définir une côte de chassage (H) constante pour la rondelle (20).

5. Dispositif de détection selon l'une des revendications 1 à 4, caractérisé par le fait que le moyen émetteur (210) comprend un oscillateur (T 213) qui est adapté pour n'émettre que pendant un temps limité consécutif à la fermeture de l'élément interrupteur (230).

6. Dispositif de détection selon la revendication 5, caractérisé par le fait que le moyen émetteur (210) comprend un oscillateur (T 213) alimenté par l'intermédiaire d'un module comprenant en série l'élément interrupteur (230) et un transistor (T 212) polarisé par une cellule RC (C 216-R 215).

7. Dispositif de détection selon la revendication 3, caractérisé par le fait que l'élément interrupteur (230) intégré à l'organe détecteur est sensible au dévissage du couvercle (204).

8. Dispositif de détection selon la revendication 7, caractérisé par le fait que l'élément interrupteur (230) sensible au dévissage du couvercle (204) comprend deux sous-ensembles comprenant respectivement une piste électriquement conductrice (232) et une lame souple (234) électriquement conductrice apte à reposer sur la piste (232), les deux sous-ensembles étant portés l'un par le boîtier (201), l'autre par le couvercle (204).

9. Dispositif de détection selon l'une des revendications 1 à 8, caractérisé par le fait que l'élément interrupteur (230) est sensible à la température.

10. Dispositif de détection selon l'une des revendications 1 à 9, caractérisé par le fait que l'élément interrupteur (230) est sensible au choc.

11. Dispositif de détection selon l'une revendications 9 ou 10, caractérisé par le fait que l'élément interrupteur (230) comprend un élément cloquant (240) associé à un interrupteur électrique (242).

12. Dispositif de détection selon l'une des revendications 1 à 11, caractérisé par le fait que l'élément interrupteur (230) est sensible à l'arrachement de l'organe détecteur.

13. Dispositif de détection selon la revendication 12, caractérisé par le fait que l'élément interrupteur (230) comprend une lame souple (250) reposant contre un voile flexible (209) ménagé sur le boîtier (201) et apte à venir reposer contre l'organe de verrouillage (10).

14. Dispositif de détection selon l'une des revendications 1 à 13, caractérisé par le fait que le moyen émetteur (210) génère une onde codée.

15. Dispositif de détection d'intervention frauduleuse selon l'une des revendications 1 à 14, pour la détection de la tentative de vol d'une roue de véhicule automobile, caractérisé par le fait qu'il comprend un organe détecteur adapté pour être monté sur un boulon (10) de fixation de la roue.

## Claims

1. Device for detecting fraudulent intervention on a locking member, characterized in that it comprises:
— a detecting member (200) for mounting on the locking member (10) and comprising :
— a transmitting means (210) suitable for generating an electromagnetic wave,
— at least one switching element (230) suitable for detecting an attempt at fraudulent intervention on the locking member (10), for activating the transmitting means (210), and
— a receiving element (100) sensitive to the wave generated by the transmitting means (210).

2. Device for detecting according to Claim 1, characterized in that it comprises a washer (20) suitable for being driven onto the locking member (10) and in that the detecting member is placed in a housing (201) provided with resilient tabs (202) suitable for ensuring latching of the housing (201) on the washer (20).

3. Device for detecting according to Claim 2, characterized in that it further comprises a cover (204) which is adapted to be screwed on the housing (201) in order to prevent flexural movement of the tabs (202) and therefore release of the housing (201).

4. Device for detecting according to one of Claims 2 and 3, characterized in that it further comprises a driving adapter means (30) comprising a body (31) provided with a recess (32) suitable for receiving the head (14) of the locking member (10) for providing a constant driving edge (H) for the washer (20).

5. Device for detecting according to one of Claims 1 to 4, characterized in that the transmitting means (210) comprises an oscillator (T 213) which is adapted to transmit only for a limited period of time following the closure of the switching element (230).

6. Device for detecting according to Claim 5, characterized in that the transmitting means (210) comprises an oscillator (T 213) supplied by way of a module comprising, arranged in series, the switching element (230) and a transistor (T 212) polarized by an RC cell (C 216-R 215).

7. Device for detecting according to Claim 3, characterized in that the switching element (230) integrated into the detecting member is sensitive to unscrewing of the cover (204).

8. Device for detecting according to Claim 7, characterized in that the switching element (230), which is sensitive to unscrewing of the cover (204), comprises two sub-assemblies comprising respectively an electrically conductive inclined section (232) and an electrically conductive resilient blade piece (234) suitable for bearing on the inclined section (232), one of the two sub-assemblies being carried by the housing (201), the other by the cover (204).

9. Device for detecting according to one of Claims 1 to 8, characterized in that the switching element (230) is sensitive to temperature.

10. Device for detecting according to one of Claims 1 to 9, characterized in that the switching element (230) is sensitive to shock.

11. Device for detecting according to one of Claims 9 or 10, characterized in that the switching element (230) comprises a convex element (240) associated with an electrical switch (242).

12. Device for detecting according to one of Claims 1 to 11, characterized in that the switching element (230) is sensitive to the disconnection of the detecting member.

13. Device for detecting according to Claim 12, characterized in that the switching element (230) comprises a resilient blade piece (250) bearing against a flexible web (209) constructed on the housing (201) and suitable for coming to bear against the locking member (10).

14. Device for detecting according to one of Claims 1 to 13, characterized in that the transmitting means (210) generates a coded wave.

15. Device for detecting fraudulent intervention according to one of Claims 1 to 14, for detecting an attempt to steal a wheel of an automotive vehicle, characterized in that it comprises a detecting member adapted to be mounted on a fixing bolt (10) of the wheel.

**Patentansprüche**

1. Detektor für einen unbefugten Eingriff auf ein Verriegelungselement, **gekennzeichnet** durch
— ein Detektorelement (200), das am Verriegelungselement (10) montiert wird und aufweist :
   — einen Sender (210) zum Erzeugen einer elektromagnetischen Welle,
   — mindestens einen Unterbrecher (230) zum Erkennen eines versuchten unbefugten Eingriffs auf das Verriegelungselement (10), um den Sender (210) in Betrieb zu setzen, und durch
— einen Empfänger (100), der auf die vom Sender (210) erzeugte Welle anspricht.

2. Detektor nach Anspruch 1, **dadurch gekennzeichnet,** daß er eine auf das Verriegelungselement (10) aufsetzbare Ringscheibe (20) aufweist und daß der Detektor in einem Gehäuse (201) mit elastischen Zungen (202), die das Einrasten des Gehäuses (201) auf der Ringscheibe (20) sicherstellen können, untergebracht ist.

3. Detektor nach Anspruch 2, **gekennzeichnet** durch weiterhin eine Abdeckung (204), die auf das Gehäuse (201) aufgeschraubt werden kann, um die Biegung der Zungen (202) und damit das Abziehen des Gehäuses (201) zu verhindern.

4. Detektor nach Anspruch 2 oder 3, **gekennzeichnet** durch ferner einen aufsteckbaren Adapter (30), der aus einem Körper (31) mit einem Hohlraum (32) zum Aufnehmen des Kopfes (14) des Verriegelungselementes (10) besteht, um eine konstante Aufstecklänge (H) für die Ringscheibe (20) zu definieren.

5. Detektor nach einem der Ansprüche 1 bis 4, dadurch **gekennzeichnet,** daß der Sender (210) einen Oszillator (T 213) aufweist, der so angepaßt ist, daß er nur während einer begrenzten Zeit nach dem Schließen des Unterbrechers (230) sendet.

6. Detektor nach Anspruch 5, dadurch **gekennzeichnet,** daß der Sender (210) einen Oszillator (T 213) aufweist, der mit einem Zwischenmodul mit einer Reihenschaltung aus Unterbrecher (230) und einem über ein RC-Glied (C 216-R 215) angesteuerten Transistor (T 212) beschaltet ist.

7. Detektor nach Anspruch 3, dadurch **gekennzeichnet,** daß der in den Detektor integrierte Unterbrecher (230) auf das Abschrauben der Abdeckung (204) anspricht.

8. Detektor nach Anspruch 7, dadurch **gekennzeichnet,** daß der Unterbrecher (230), der auf das Abschrauben der Abdeckung (204) anspricht, zwei Untereinheiten aufweist, mit jeweils einer elektrisch leitenden Spur (232) und einem elektrisch leitenden biegsamen Arm (234), der auf der Spur (232) zu liegen kommen kann, wobei von den zwei Untereinheiten die eine auf dem Gehäuse (201) und die andere auf der Abdeckung (204) sitzt.

9. Detektor nach einem der Ansprüche 1 bis 8, dadurch **gekennzeichnet,** daß der Unterbrecher (230) temperaturempfindlich ist.

10. Detektor nach einem der Ansprüche 1 bis 9, dadurch **gekennzeichnet,** daß der Unterbrecher (230) stoßempfindlich ist.

11. Detektor nach Anspruch 9 oder 10, dadurch **gekennzeichnet,** daß der Unterbrecher (230) ein mit einem elektrischen Unterbrecher (242) verbundenes blasenartiges Element (240) aufweist.

12. Detektor nach einem der Ansprüche 1 bis 11, dadurch **gekennzeichnet,** daß der Unterbrecher (230) auf das Abreißen des Detektors anspricht.

13. Detektor nach Anspruch 12, dadurch **gekennzeichnet,** daß der Unterbrecher (230) einen biegsamen Arm (250) aufweist, der an einer flexiblen Abdekkung (209) anliegt, die in dem Gehäuse (201) vorgesehen ist und gegen das Verriegelungselement (10) zu liegen kommt.

14. Detektor nach einem der Ansprüche 1 bis 13, dadurch **gekennzeichnet**, daß der Sender (210) eine kodierte Welle erzeugt.

15. Detektor nach einem der Ansprüche 1 bis 14 zum Erkennen eines versuchten Diebstahls des Rades eines Kraftfahrzeuges, **gekennzeichnet** durch ein Detektorelement, das auf einen Bolzen (10) einer Radbefestigung montierbar ist.

## FIG_1

MODULE
DETECTION

100

102

ALARME
(CENTRALE)

106

SIRENE

104

MISE EN VEILLE

10
10
10
10
12
200

## FIG_2

203
22
10
202
204
200
13
20
203
202
201

## FIG_3

14
20
30
31
22
15
34
10
32
33
H

13

FIG_4

FIG. 5

FIG.6

FIG_7

FIG. 8

EP 0 291 412 B1

FIG.9